# EUROPEAN PATENT SPECIFICATION

(11) **EP 3 824 047 B1**
(45) Date of publication and mention of the grant of the patent: **12.08.2026**
(21) Application number: 19742726.3
(22) Date of filing: 19.07.2019
(51) Int. Cl.: C10G 3/00, C10G 1/06, C10G 1/00, C10G 21/16, C10G 47/00, C10G 9/00, C10G 9/36, C10G 11/18, C10G 45/00, C10G 45/58

(54) **PRODUCTION OF HYDROCARBONS FROM RECYCLED OR RENEWABLE ORGANIC MATERIAL**
HERSTELLUNG VON KOHLENWASSERSTOFFEN AUS RECYCELTEM ODER ERNEUERBAREM ORGANISCHEM MATERIAL
PRODUCTION D'HYDROCARBURES À PARTIR D'UN MATÉRIAU ORGANIQUE RECYCLÉ OU RENOUVELABLE

(30) Priority: 20.07.2018 FI 20185653
(43) Date of publication of application: 26.05.2021
(73) Proprietor: Neste Oyj, 02150 Espoo (FI)
(72) Inventor: TOURONEN, Jouni, 06101 Porvoo (FI); LAMMINPÄÄ, Kaisa, 06101 Porvoo (FI); PASANEN, Antti, 06101 Porvoo (FI); KUITUNEN, Susanna, 06101 Porvoo (FI); ZAITSEVA, Anna, 06101 Porvoo (FI)
(74) Representative: Kolster Oy Ab
(86) International application number: PCT/EP2019/069497
(87) International publication number: WO 2020/020771

(56) References cited:
- WO-A1-2013/089838
- US-A- 4 160 725
- US-A- 4 241 227
- US-A1- 2005 240 065
- US-A1- 2013 345 487
- US-A1- 2014 005 451
- US-B1- 6 586 638
- US-B2- 9 688 919

## Description

### FIELD OF THE INVENTION

The present invention relates to a method of producing hydrocarbons from a recycled or renewable organic material, in particular recycled or renewable organic material comprising hydroxyaromatic hydrocarbon compounds.

### BACKGROUND OF THE INVENTION

US9,688,919 B2 discloses conversion of tall oil into hydrocarbons by hydrotreatment.

US2013/345487A1 discloses conversion of biomass into hydrocarbons by hydrotreatment and phenol separation.

In some cases recycled or renewable organic material contains organic high amounts of complex organic molecules that degrade to phenol derivatives when subjected to hydrotreatment processes. For example tall oil pitch (TOP) contains high amounts of sterols. In a hydrotreatment process, such as hydrodeoxygenation (HDO), the sterols degrade to, among others, low molar weight phenol and alkylphenols. The alkylphenols and phenol are water soluble and end up into the waste water stream reducing the potential hydrocarbon yield from the process. Phenol yield from the hydrotreatment of TOP can be as high as 1 kg/ton of TOP. Such high yield of phenols is challenging for a waste water treatment plant because phenols are poisonous for a biological treatment. Therefore a strategy to handle the produced phenols is required.

### BRIEF DESCRIPTION OF THE INVENTION

An object of the present invention is thus to provide a method so as to overcome the above problems. The objects of the invention are achieved by a method which is characterized by what is stated in the independent claims. The preferred embodiments of the invention are disclosed in the dependent claims.

The invention is based on the surprizing realization recycled or renewable organic material containing high amounts of hydroxyaromatic hydrocarbon compounds, such as phenolic compounds, may be used to produce hydrocarbons from recycled or renewable organic material while minimizing the amount of phenols in waste water by separating phenols from the phenol-containing effluent obtained from a hydrotreatment step and recycling said phenol stream back to hydrotreatment step simultaneously increasing the yield of obtained hydrocarbons.

### BRIEF DESCRIPTION OF THE DRAWINGS

In the following the invention will be described in greater detail by means of preferred embodiments with reference to the attached drawings, in which
Figure 1 illustrates a first exemplary process flow of the present method;
Figure 2 illustrates a second exemplary process flow of the present method;
Figure 3 is scheme for the separation of waste water in a HDO process;
Figure 4 is scheme of an extractive phenol separation process;
Figure 5 is a scheme of the stripping phenol separation outside of the scope of the invention.

### DETAILED DESCRIPTION OF THE INVENTION

The present invention provides a method of producing hydrocarbons from recycled or renewable organic material.

The term "recycled or renewable organic material" refers to organic material, i.e. material containing carbon, obtained 1) from a natural resource which replenishes to overcome recourse depletion caused by its usage and consumption or 2) from a raw or processed material that is recovered from a waste for reuse. The recycled or renewable organic material characteristically comprises aliphatic compounds having a carbon chain of from 4 to 30 carbon atoms, particularly from 12 to 22 carbon atoms. Typical examples of such aliphatic compounds are fatty acids or esters thereof, in particular wherein the fatty acids have an aliphatic chain of from 4 to 30 carbon atoms, more particularly from 12 to 22 carbon atoms. The recycled or renewable organic material typically comprises at least 50 wt% aliphatic compound of the total weight of the recycled or renewable organic material.

Typically the recycled or renewable organic material refers to fats and/or oils of plant, microbial, algal, and/or animal origin. It also refers to any waste stream received from processing of such oils and/or fats. The recycled or renewable organic material may be in an unprocessed form (e.g. animal fat), or a processed form (used cooking oil). The recycled or renewable organic material also refers to fossil waste-based oils and waste oils. However, in the invention the recycled or renewable organic material is crude tall oil (CTO) or its derivatives such as tall oil pitch (TOP), tall oil fatty acid (TOFA), distilled tall oil (DTO) and crude fatty acid (CFA).

The term "plant based fats and oils" refers to fat and/or oils of plant origin i.e. oils that can originate directly from plants or can be byproducts from various industrial sectors, such as agriculture or forest industry.

Examples of plant based fats and oils include, but are not limited to, sludge palm oil, rapeseed oil, canola oil, colza oil, sunflower oil, soybean oil, hemp oil, olive oil, linseed oil, cottonseed oil, mustard oil, palm oil, arachis oil, castor oil and coconut oil.

Other examples of plant based fats and oils include biocrudes and bio oils. Biocrudes and bio oils are produced from biomass, in particular from lignocellulosic biomass, with various liquefying methods, such as hydrothermal liquefaction, or pyrolysis, in particular fast pyrolysis.

The term "biocrude" refers to oils produced from biomass by employing hydrothermal liquefaction. The term "bio oil" refers to pyrolysis oils produced from biomass by employing pyrolysis. The term "biomass" refers to material derived from recently living organisms, which includes plants, animals and their byproducts. The term "lignocellulosic biomass" refers to biomass derived from plants or their byproducts. Lignocellulosic biomass is composed of carbohydrate polymers (cellulose, hemicellulose) and an aromatic polymer (lignin).

The term "pyrolysis" refers to thermal decomposition of materials at elevated temperatures in a non-oxidative atmosphere. The term "fast pyrolysis" refers to thermochemical decomposition of biomass through rapid heating in absence of oxygen. The term "hydrothermal liquefaction" (HTL) refers to a thermal depolymerization process used to convert wet biomass into crude-like oil under moderate temperature and high pressure.

Examples of bio oil and biocrude produced from lignocellulosic biomass, e.g. materials like forest harvesting residues or byproducts of a saw mill, are lignocellulosic pyrolysis liquid (LPL), produced by employing fast pyrolysis, and HTL-biocrude, produced by employing hydrothermal liquefaction.

In the invention, the plant based fats and oils are crude tall oil (CTO), obtained as a by-product of the Kraft process (wood pulping), or its derivatives, such as tall oil pitch (TOP), crude fatty acid (CFA), tall oil fatty acid (TOFA) and distilled tall oil (DTO).

Crude tall oil comprises resin acids, fatty acids, and unsaponifiables. Resin acids are a mixture of organic acids derived from oxidation and polymerization reactions of terpenes. The main resin acid in crude tall oil is abietic acid but abietic derivatives and other acids, such as primaric acid are also found. Fatty acids are long chain monocarboxylic acids and are found in hardwoods and softwoods. The main fatty acids in crude tall oil are oleic, linoleic and palmitic acids. Unsaponifiables cannot be turned into soaps as they are neutral compounds which do not react with sodium hydroxide to form salts. They include sterols, higher alcohols and hydrocarbons. Sterols are steroids derivatives which also include a hydroxyl group.

The term "tall oil pitch (TOP)" refers to residual bottom fraction from crude tall oil (CTO) distillation processes. Tall oil pitch typically comprises from 34 to 51 wt% free acids, from 23 to 37 wt% esterified acids, and from 25 to 34 wt% unsaponifiable neutral compounds of the total weight of the tall oil pitch. The free acids are typically selected from a group consisting of dehydroabietic acid, abietic and other resin acids. The esterified acids are typically selected from a group consisting of oleic and linoleic acids. The unsaponifiables neutral compounds are typically selected from a group consisting of diterpene sterols, fatty alcohols, sterols, and dehydrated sterols.

The term "crude fatty acid (CFA)" refers to fatty acid-containing materials obtainable by purification (e.g., distillation under reduced pressure, extraction, and/or crystallization) of CTO.

The term "tall oil fatty acid (TOFA)" refers to fatty acid rich fraction of crude tall oil (CTO) distillation processes. TOFA typically comprises mainly fatty acids, typically at least 80 wt% of the total weight of the TOFA. Typically TOFA comprises less than 10 wt% rosin acids.

The term "distilled tall oil (DTO)" refers to resin acid rich fraction of crude tall oil (CTO) distillation processes. DTO typically comprises mainly fatty acids, typically from 55 to 90 wt%, and rosin acids, typically from 10 to 40 wt% rosin acids, of the total weight of the DTO. Typically DTO comprises less than 10 wt% unsaponifiable neutral compounds of the total weight of the distilled tall oil.

The term "animal based fats and oils" refers to fats and/or oils of animal origin i.e lipid materials derived from animals. Examples of animal based fats and oils include, but are not limited to, such as suet, tallow, blubber, lard, train oil, milk fat, fish oil, poultry oil and poultry fat.

The term "microbial oils" refers to triglycerides (lipids) produced by microbes.

The term "algal oils" refers to oils derived directly from algae.

The term "fossil waste-based oils" refers to oils produced from waste streams like waste plastics or end-life-tires. Examples of fossil waste-based oils include waste plastic pyrolysis oil (WPPO) and end-life-tire pyrolysis oil (ELTPO).

The term "waste oils" refers to any oils that, through contamination, have become unsuitable for their original purpose due to the presence of impurities or loss of original properties. Examples of waste oils are used lubricant oils (ULO), hydraulic oils, transformer oils or oils used in metal working.

Particular examples of recycled or renewable organic material include, but are not limited to, animal based fats and oils, such as suet, tallow, blubber, lard, train oil, milk fat, fish oil, poultry oil, and poultry fat; plant based fats and oils, such as sludge palm oil, rapeseed oil, canola oil, colza oil, sunflower oil, soybean oil, hemp oil, olive oil, linseed oil, cottonseed oil, mustard oil, palm oil, arachis oil, castor oil, coconut oil, lignocellulosic pyrolysis liquid (LPL), HTL biocrude, crude tall oil (CTO), tall oil pitch (TOP), crude fatty acid (CFA), tall oil fatty acid (TOFA) and distilled tall oil (DTO); microbial oils; algal oils; recycled fats or various waste streams of the food industry, such as used cooking oil, yellow and brown greases; free fatty acids, any lipids containing phosphorous and/or metals, oils originating from yeast or mold products, recycled alimentary fats; starting materials produced by genetic engineering, and any mixtures of said feedstocks.

In an example of the present invention the recycled or renewable organic material is crude tall oil (CTO) or tall oil pitch (TOP).

In another example of the present invention the recycled or renewable organic material is tall oil pitch (TOP).

The recycled or renewable organic material to be treated by the present method contains high amounts hydroxyaromatic hydrocarbon compounds. Examples of such hydroxyaromatic hydrocarbon compounds include plant based hydroxyaromatic hydrocarbon compounds such as sterols, lignin, and phenolic lipids such as cardanol. Further examples of hydroxyaromatic hydrocarbon compounds include animal fat based hydroxyaromatic hydrocarbon compounds such as sterols. The recycled or renewable organic material of the present invention comprises more than 0.01 wt% hydroxyaromatic hydrocarbon compounds. In particular the recycled or renewable organic material of the present invention comprises more than 0.05 wt% hydroxyaromatic hydrocarbon compounds, more particularly the recycled or renewable organic material of the present invention comprises more than 0.1 wt% hydroxyaromatic hydrocarbon compounds, and even more particularly the recycled or renewable organic material of the present invention comprises more than 0.5 wt% hydroxyaromatic hydrocarbon compounds of the total weight of the recycled or renewable organic material.

The recycled or renewable organic material to be treated by the present method may also comprise further impurities e.g. impurities comprising phosphorus and/or metals in the form of phospholipids, soaps and/or salts. The impurities may for example be in the form of phosphates or sulfates, iron salts or organic salts, soaps or phospholipids. The metal impurities that may be present in the biomass-based lipid material are for example alkali metals or alkali earth metals, such as sodium or potassium salts, or magnesium or calcium salts, or any compounds of said metals.

Accordingly provided herein is a method according to claim 1.

In step (b) the recycled or renewable organic material is optionally purified to remove undesired impurities, such as phosphorous and/or silicon, from the recycled or renewable organic material. The purification step (b) may be accomplished by heat treating or bleaching the recycled or renewable organic material or by any other method found suitable by a skilled person for purifying recycled or renewable organic material.

The recycled or renewable organic material is subjected to hydrotreatment in a presence of a hydrotreating catalyst, optionally after the purification step (b).

The term "hydrotreating" refers to a chemical engineer process in which reaction of hydrogen is used to remove impurities, such as oxygen, sulphur, nitrogen, phosphorous, silicon and metals, especially as part of oil refining.

Hydrotreating can be performed in one or several steps in one or more reactor units or catalyst beds.

Step (c) is typically achieved under continuous hydrogen flow. For achieving optimal results the continuous hydrogen flow is step (c) preferably has H2/feed ratio from 500 to 2000 n-L/L, more preferably from 800 to 1400 n-L/L.

In step (c) hydrotreatment is advantageously performed at a temperature from 270 to 380°C, preferably from 275 to 360°C, more preferably from 300 to 350°C. Typically the pressure in step (c) is from 4 to 20 MPa.

The hydrotreatment catalyst is step (c) preferably comprises at least one component selected from IUPAC group 6, 8 or 10 of the Periodic Table.. Preferably the hydrotreating catalyst in step (c) is a supported Pd, Pt, Ni, NiW, NiMo or a CoMo catalysts and the support is zeolite, zeolite-alumina, alumina and/or silica, preferably NiW/Al₂O₃, NiMo/Al₂O₃ or CoMo/Al₂O₃. In particular the hydrotreating catalyst is a sulphided NiW, NiMO or CoMo catalyst.

The time during which the recycled or renewable organic material is heated and held at the desired temperature, i.e. residence time, is typically from 1 to 300 min, preferably from 5 to 240 min, more preferably from 30 to 90 min in step (c).

An applicable hydrotreatment step (c) provides a purified hydrotreated recycled or renewable organic material. The purified hydrotreated recycled or renewable organic material advantageously comprises less than 50 % of the chlorine content of the recycled or renewable organic material provided in step (a).

For achieving optimal results part of the hydrotreated recycled or renewable organic material may be recycled in step (c). Preferably the ratio of the fresh feed i.e. purified recycled or renewable organic material obtained in step (b) to the recycled hydrotreated recycled or renewable organic material is from 2:1 to 20:1.

In a particular example step (c) is accomplished by (c1) hydrodeoxygenating (HDO) the recycled or renewable organic material. This is preferably achieved in a presence of a HDO catalyst. Preferably this is achieved at a presence of a HDO catalyst at a temperature from 290 to 350°C under pressure from 4 to 20 MPa and under continuous hydrogen flow.

The term "hydrodeoxygenation (HDO)" refers to removal of oxygen as water by the means of molecular hydrogen under the influence of a (HDO) catalyst.

The HDO catalyst may for example be selected from a group consisting of NiMO-, CoMo-, NiW-catalysts and any mixtures thereof. Preferably the HDO catalyst is sulphided NiW, NiMo or CoMo catalyst.

Advantageously, the continuous hydrogen flow has H2/feed ratio from 500 to 2000 n-L/L, preferably from 800 to 1400 n-L/L.

Preferably step (c1) is performed to obtain hydrodeoxygenated recycled or renewable organic material comprising less than 1 wt% oxygen.

For achieving optimal results part of the deoxygenated recycled or renewable organic material may be recycled in step (c). Preferably the ratio of the fresh feed i.e. purified recycled or renewable organic material obtained in step (b) to the recycled deoxygenated recycled or renewable organic material is from 2:1 to 20:1.

In another example step (c) is accomplished by (c2) hydrodesulfurizing (HSD) the heat treated recycled or renewable organic material fraction. The term "hydrodesulfurisation (HDS)" refers to removal of sulfur as hydrogensulfide by the means of molecular hydrogen under the influence of a (HDS) catalyst.

In another example step (c) is accomplished by (c3) hydrometaillizing (HDM) the heat treated recycled or renewable organic material fraction. The term "hydrodemetallization (HDM)" refers to removal of metals by trapping them with a (HDM) catalyst.

In another example step (c) is accomplished by (c4) hydrodenitrificating (HDN) the heat treated recycled or renewable organic material fraction. The term "hydrodenitrification (HDN)" refers to removal of nitrogen by the means of molecular hydrogen under the influence of a (HDN) catalyst.

In another example step (c) is accomplished by (c5) hydrodearomatizing (HDA) the heat treated recycled or renewable organic material fraction. The term "hydrodearomatisation (HDA)" refers to saturation or ring opening of aromatics by the means of molecular hydrogen under the influence of a (HDA) catalyst.

In step (d) phenols are separated from the phenol containing effluent thereby forming a phenol stream and a purified water stream.

The phenols are separated from the phenol containing effluent by liquid-liquid extraction with a non-aromatic organic solvent that is sparingly soluble to water. The non-aromatic organic solvent is selected from a group consisting of mesityl oxide, methyl isobutyl ketone, methyl tert-butyl ketone, methyl tert-butyl ether, methyl isopropyl ketone, 3-heptanone, 2-hexanone and mixtures thereof. More preferably the non-aromatic organic solvent is methyl isobutyl ketone.

Step (d1) takes place at any temperature from 30 to 50°C and is performed under pressure from 100 to 200 kPa.

For another example (d2) the phenols are separated from the phenol containing effluent by stream stripping the phenol containing effluent to obtain a phenol stream and a purified water stream.

Step (d2) takes place at any temperature from 102 to 135 °C and is performed under pressure from 100 to 300 kPa.

After separation in step (d) the phenol stream is recycled to the hydrodeoxygenation step (c) wherein it is converted to benzene and alkylbenzenes and other cracking products under the prevailing conditions. This increases the hydrocarbon yield of the hydrotreatment process.

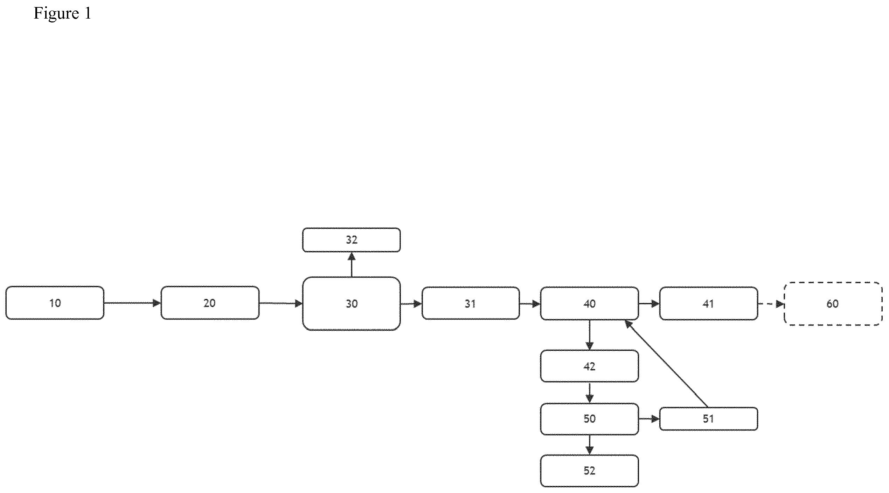

Figure 1 illustrates a first exemplary process flow of the present method.

Referring to Figure 1, a feed of recycled or renewable organic material, in particular tall oil pitch (TOP), 10 is optionally subjected to a step of heat treating 20 the recycled or renewable organic material as discussed herein for step (b1). The heat treated feed of recycled or renewable organic material is then evaporated 30 as discussed herein for step (b1) and a bottom containing a heat treated recycled or renewable organic material fraction 31 comprising less than 50% of the original silicon content of the recycled or renewable organic material provided in step (a), and a vapor fraction 32 comprising the major part of volatile undesired impurities is obtained. The heat treated recycled or renewable organic material is then subjected to hydrotreatment 40, as discussed herein for step (c) to obtain a hydrocarbon stream 41 and a phenol containing effluent 42. The phenol containing effluent is then subjected to separating 50 phenols from the phenol-containing effluent of step (d), thereby forming a phenol stream 51 and a purified water stream 52 as discussed herein for step (d); and the phenol stream obtained in step (d) is then recycled to hydrotreatment 40 as discussed herein for step (e). The purified recycled or renewable organic material 41 may then be subjected to catalytic upgrading 60.

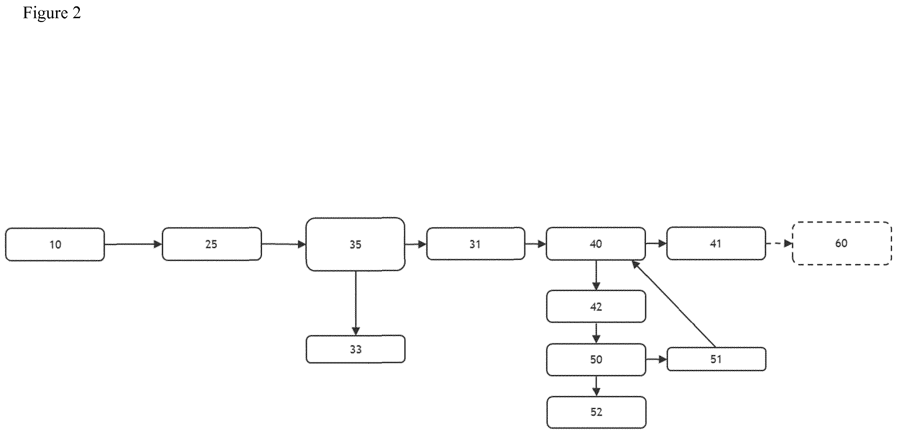

Figure 2 illustrates a second exemplary process flow of the present method.

Referring to Figure2, a feed of recycled or renewable organic material, in particular tall oil pitch (TOP), 10 is optionally subjected to a step of heat treating 25 the recycled or renewable organic material in a presence of an adsorbent as discussed herein for step (b2). The adsorbent is then separated 35 from the heat treated feed of recycled or renewable organic material as discussed herein for step (b2) and a heat treated recycled or renewable organic material fraction 31 comprising less than 50% of the original silicon content of the recycled or renewable organic material provided in step (a), and the adsorbent 33 comprising the major part of undesired impurities is obtained. The heat treated recycled or renewable organic material is then subjected to hydrotreatment 40, as discussed herein for step (c) to obtain a hydrocarbon stream 41 and a phenol containing effluent 42. The phenol containing effluent is then subjected to separating 50 phenols from the phenol-containing effluent of step (d), thereby forming a phenol stream 51 and a purified water stream 52 as discussed herein for step (d); and the phenol stream obtained in step (d) is then recycled to hydrotreatment 40 as discussed herein for step (e). The purified recycled or renewable organic material 41 may then be subjected to catalytic upgrading 60.

After hydrocarbons have been produced in accordance with the present method, it may be subjected to further processing e.g. catalytic upgrading. Such catalytic upgrading processes include, but are not limited to, catalytic cracking, catalytic hydrocracking, thermo-catalytic cracking, catalytic hydrotreatment, fluid catalytic cracking, catalytic ketonization, and catalytic esterification. Such processes require the recycled or renewable organic material to be sufficiently pure and free from impurities that may otherwise hamper the catalytic process or poison the catalyst(s) present in the process.

Accordingly outside of the scope of the invention, the description further provides a second process for producing recycled or renewable hydrocarbons, comprising steps of (x) purifying the recycled or renewable organic material as discussed herein, and (y) subjecting the purified recycled or renewable organic material to an oil refinery conversion process, wherein the oil refinery conversion process comprises altering the molecular weight of the feed, such hydrocracking, or steamcracking, removal of heteroatoms from the feed, such as thermal catalytic cracking, fluid catalytic cracking, or hydrotreating, in particular hydrodeoxygenating, or hydrodesulfurizing, altering the degree of saturation of the feed, such as hydrotreating, thermal catalytic cracking, or fluid catalytic cracking, rearranging the molecular structure of the feed, such as isomerizing, or any combination thereof to obtain at least one recycled or renewable hydrocarbon.

In a typical example of the second process the recycled or renewable hydrocarbon is a renewable traffic fuel or fuel component.

In an example of the second process, step (y) is hydrocracking. In such example, step (y) is preferably performed in a mild hydrocracking (MHC) refinery unit, in particular in a presence of a hydrocracking catalyst.

In another example of the second process, step (y) is steamcracking. In such example step (y) is preferably performed in a steamcracking unit.

In yet another example of the second process, step (y) is isomerization. In such example, step (y) is preferably performed in an isomerization unit.

In yet another example of the second process, step (y) is hydrotreating. In such example, step (y) is preferably performed in a hydrotreating unit.

In yet another example of the second process, step (y) is thermal catalytic cracking (TCC). In such example, step (y) is preferably performed in a thermal catalytic cracking unit.

In yet another example of the second process, step (y) is fluid catalytic cracking (FCC). In such example, step (y) is preferably performed in a fluid catalytic cracking unit.

### EXAMPLES

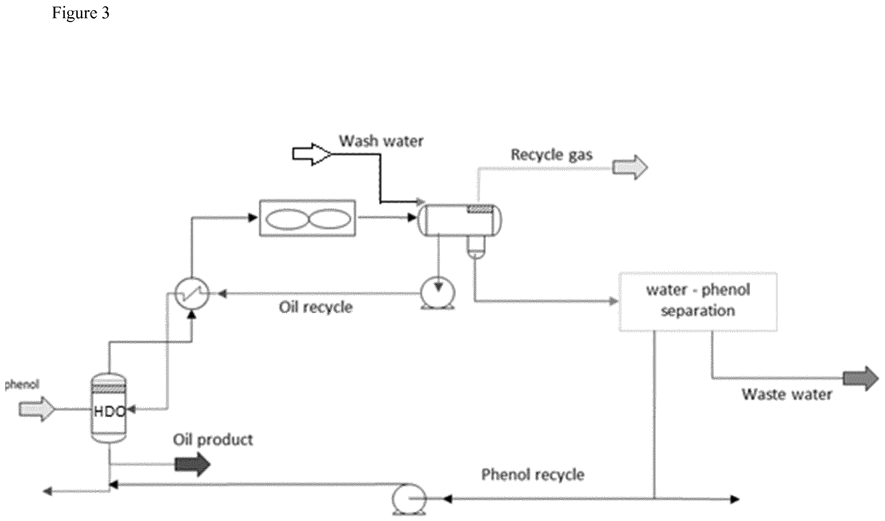

The test simulations were made to provide preliminary estimates for the cost of the phenol separation process. The waste water stream from Figure 3 is considered in the simulation and the update of other streams shown in Figure 3 is provided for the process with the phenol stream recycling.

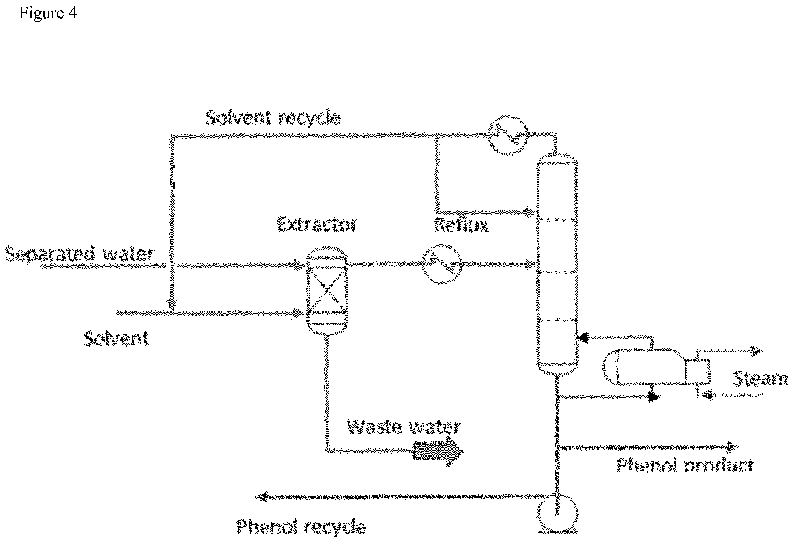

For extraction process (Figure 4) the simulation is done for a 40C extraction process and the solvent recycle distillation at 1 bar. The conditions could be optimized in future, because there is overpressure in the feed water stream and the phenol recycle should be pressurized for the recycling to the reactor. The considered process is based on methyl isobutyl ketone solvent, which demonstrates very high selectivity towards phenol extraction.

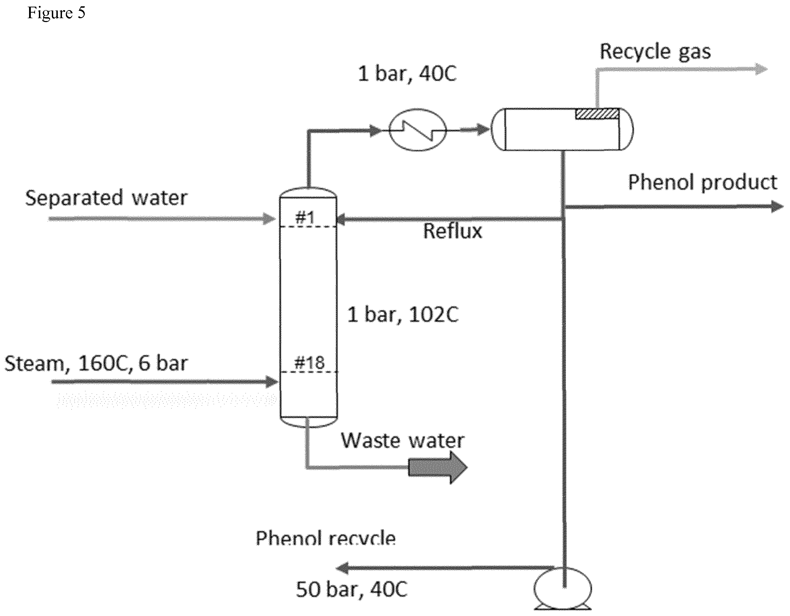

The stripping column (Figure 5) is simulated at atmospheric pressure. The water flow from the HDO unit is 5 bar and 40 C, thus 2 bar pressure is also possible to utilize in the column. The heating is unavoidable for the stripping column that operates at 100, but heat of the oil from HDO unit can be used for the energy integration. If the waste water satisfies 1 ppmw phenol specification, considerable amount of water is recycled to the reactor (see Table 2). Thus, about 15 kW is needed for the recycle flow pressurization to the reactor pressure.

**Table 1. Comparison of the phenol separation processes; phenol stripping and phenol extraction. Phenol flow rates.**

| Case | Recycle + phenol conversion | Phenol recycled | Phenol in rec. Oil | phenol in sour gas | Phenol in oil product | phenol in waste water | Phenol in waste water | Benzene yield |
|---|---|---|---|---|---|---|---|---|
| | | kg/h | kg/h | kg/h | kg/h | kg/h | ppmw | kg/h |
| Dist A0 | No | 6.6 | 8 | 0.2 | 2.3 | 0.002 | 0.94 | - |
| Dist A1 | Yes, 50% | 8.3 | 9.2 | 0.17 | 2.6 | 0.97 | 304 | 4.1 |
| Dist A2 | Yes, 50% | 10.4 | 9.2 | 0.1 | 2.6 | 0.007 | 1.06 | 5.2 |
| Dist B1 | Yes, 80% | 7.3 | 8 | 0.15 | 2.3 | 0.82 | 256.3 | 5.8 |
| Dist B2 | Yes, 80% | 8.8 | 7.7 | 0.09 | 2.2 | 0.007 | 1.1 | 7 |
| Ext C0 | No | 6.6 | 8 | 0.2 | 2.3 | 6E-07 | 4E-04 | - |
| Ext C1 | Yes, 50% | 11.5 | 8 | 1.13 | 2.3 | 3E-07 | 2E-04 | 5.7 |
| Ext C2 | Yes, 50% | 12.4 | 7.5 | 1.2 | 2.1 | 2E-06 | 1E-03 | 6.2 |
| Ext D1 | Yes, 80% | 9.8 | 6.5 | 1 | 1.8 | 2E-06 | 1E-03 | 7.8 |
| Ext D2 | Yes, 80% | 10.2 | 6.2 | 1 | 1.8 | 7E-07 | 5E-04 | |

**Table 2. Comparison of the phenol separation processes; phenol stripping and phenol extraction. Energy characteristics.**

| | Recycle + phenol conversion | Energy of condenser | water to reactor / solvent makeup | Steam rate | Steam energy |
|---|---|---|---|---|---|
| | | kW | kg/h | kg/h | kW |
| Dist A0 | No | 1117.8 | 1060 | 1750 | 1014 |
| Dist A1 | Yes, 50% | 1042 | 988 | 1750 | 1014 |
| Dist A2 | Yes, 50% | 3273 | 3107 | 5153 | 2987 |
| Dist B1 | Yes, 80% | 1042 | 988 | 1750 | 1014 |
| Dist B2 | Yes, 80% | 3119 | 2960 | 4917 | 2850 |
| Ext C0 | No | 378 | 12.3 | - | 296.8 |
| Ext C1 | Yes, 50% | 268 | 29 | - | 297 |
| Ext C2 | Yes, 50% | 726 | 12.7 | - | 815 |
| Ext D1 | Yes, 80% | 266 | 23.2 | - | 297 |
| Ext D2 | Yes, 80% | 793 | 12 | - | 895 |

It will be obvious to a person skilled in the art that, as the technology advances, the inventive concept can be implemented in various ways. The invention and its embodiments are not limited to the examples described above but may vary within the scope of the claims.

## Claims

1. A method of producing hydrocarbons from a recycled or renewable organic material wherein the recycled or renewable organic material comprises hydroxyaromatic hydrocarbon compounds and is crude tall oil (CTO) or its derivatives such as tall oil pitch (TOP), tall oil fatty acid (TOFA), distilled tall oil (DTO) and crude fatty acid (CFA), wherein CFA refers to fatty acid-containing materials obtainable by purification of CTO, comprising the steps of
(a) providing recycled or renewable organic material;
(b) optionally purifying by heat treating or bleaching the recycled or renewable organic material;
(c) hydrotreating the recycled or renewable organic material in a presence of a hydrotreating catalyst, thereby forming a hydrocarbon stream and a phenol-containing effluent;
(d) separating phenols from the phenol-containing effluent of step (c), by liquid-liquid extraction with a non-aromatic organic solvent that is sparingly soluble to water selected from a group consisting of mesityl oxide, methyl isobutyl ketone, methyl tert-butyl ketone, methyl tert-butyl ether, methyl isopropyl ketone, 3-heptanone, 2-hexanone and mixtures thereof, thereby forming a phenol stream and a purified water stream; and
(e) recycling the phenol stream obtained in step (d) to step (c) to increase the yield of hydrocarbons obtained from step (c);
to obtain hydrocarbons comprising less than 1 wt% oxygen.

2. A method as claimed in claim 1, wherein the recycled or renewable organic material comprises more than 0.01 wt%, preferably 0.05 wt%, more preferably more than 0.1 wt%, hydroxyaromatic hydrocarbon compounds.

3. A method as claimed in any one of claims 1 to wherein step (b) is accomplished by heat treating the recycled or renewable organic material.

4. A method as claimed in any one of claims 1 to 2, wherein step (b) is accomplished by bleaching the recycled or renewable organic material.

5. A method as claimed in any of the claims 1 to 4, wherein hydrotreating step (c) takes place under continuous hydrogen flow and the continuous hydrogen flow has H2/feed ratio from 500 to 2000 n-L/L, preferably from 800 to 1400 n-L/L.

6. A method as claimed in any one of claims 1 to 5, wherein step (c) is performed at a temperature from 270 to 380°C, preferably from 275 to 360°C, more preferably from 300 to 350°C.

7. A method as claimed in any one of claims 1 to 6, wherein step (c) is performed under pressure from 4 to 20 MPa.

## Patentansprüche

1. Verfahren zur Herstellung von Kohlenwasserstoffen aus einem recycelten oder erneuerbaren organischen Material, wobei das recycelte oder erneuerbare organische Material hydroxyaromatische Kohlenwasserstoffverbindungen umfasst und Roh-Tallöl (CTO) oder seine Derivate ist, wie Tallölpech (TOP), Tallölfettsäure (TOFA), destilliertes Tallöl (DTO) und Rohfettsäure (CFA), wobei sich CFA auf fettsäurehaltige Materialien bezieht, die durch Reinigung von CTO erhalten werden können, umfassend die folgenden Schritte
(a) Bereitstellen von recyceltem oder erneuerbarem organischem Material;
(b) optionales Reinigen des recycelten oder erneuerbaren organischen Materials durch Wärmebehandlung oder Bleichen;
(c) Hydrotreating des recycelten oder erneuerbaren organischen Materials in einer Anwesenheit eines Hydrotreating-Katalysators, dadurch Bilden eines Kohlenwasserstoffstroms und eines phenolhaltigen Austrittstroms;
(d) Abscheiden von Phenolen aus dem phenolhaltigen Austrittstrom von Schritt (c) durch Flüssig-flüssig-Extraktion mit einem nicht aromatischen organischen Lösungsmittel, das schwer wasserlöslich ist, ausgewählt aus der Gruppe bestehend aus Mesityloxid, Methylisobutylketon, Methyl-tert-butylketon, Methyl-tert-butylether, Methylisopropylketon, 3-Heptanon, 2-Hexanon und Gemischen davon, dadurch Bilden eines Phenolstroms und eines Stroms aus gereinigtem Wasser; und
(e) Recyceln des in Schritt (d) erhaltenen Phenolstroms zu Schritt (c), um einen Ertrag von aus Schritt (c) erhaltenen Kohlenwasserstoffen zu erhöhen;
um Kohlenwasserstoffe zu erhalten, die weniger als 1 Gew.-% Sauerstoff umfassen.

2. Verfahren nach Anspruch 1, wobei das recycelte oder erneuerbare organische Material mehr als 0,01 Gew.-%, vorzugsweise 0,05 Gew.-%, besonders bevorzugt mehr als 0,1 Gew.-% hydroxyaromatische Kohlenwasserstoffverbindungen umfasst.

3. Verfahren nach einem der Ansprüche 1 bis 2, wobei Schritt (b) durch Wärmebehandlung des recycelten oder erneuerbaren organischen Materials erreicht wird.

4. Verfahren nach einem der Ansprüche 1 bis 2, wobei Schritt (b) durch Bleichen des recycelten oder erneuerbaren organischen Materials erreicht wird.

5. Verfahren nach einem der Ansprüche 1 bis 4, wobei der Hydrotreating-Schritt (c) unter kontinuierlichem Wasserstoffstrom stattfindet und der kontinuierliche Wasserstoffstrom ein Verhältnis von H2/Einspeisung von 500 bis 2000 n-L/L, vorzugsweise von 800 bis 1400 n-L/L aufweist.

6. Verfahren nach einem der Ansprüche 1 bis 5, wobei Schritt (c) bei einer Temperatur von 270 bis 380 °C, vorzugsweise von 275 bis 360 °C, besonders bevorzugt von 300 bis 350 °C durchgeführt wird.

7. Verfahren nach einem der Ansprüche 1 bis 6, wobei Schritt (c) unter Druck von 4 bis 20 MPa durchgeführt wird.

## Revendications

1. Procédé de production d'hydrocarbures à partir d'une matière organique recyclée ou renouvelable dans lequel la matière organique recyclée ou renouvelable comprend des composés hydrocarbonés hydroxyaromatiques et est du tallöl brut (CTO) ou ses dérivés tels que la poix de tallöl (TOP), l'acide gras de tallöl (TOFA), le tallöl distillé (DTO) et l'acide gras brut (CFA), dans lequel CFA fait référence à des matériaux contenant des acides gras pouvant être obtenus par purification du CTO, comprenant les étapes de
(a) fournir des matières organiques recyclées ou renouvelables ;
(b) la purification facultativement par traitement thermique ou blanchiment de la matière organique recyclée ou renouvelable ;
(c) hydrotraitement de la matière organique recyclée ou renouvelable en présence d'un catalyseur d'hydrotraitement, formant ainsi un flux d'hydrocarbures et un effluent contenant du phénol ;
(d) la séparation de phénols de l'effluent contenant du phénol de l'étape (c), par extraction liquide-liquide avec un solvant organique non aromatique qui est faiblement soluble dans l'eau sélectionné dans un groupe consistant en oxyde de mésityl, isobutylcétone de méthyle, tert-butylcétone de méthyle, méthyl tert-butyl éther, méthyl isopropyl cétone, 3-heptanone, 2-hexanone et des mélanges de ceuxci, formant ainsi un flux de phénol et un flux d'eau purifiée ; et
(e) le recyclage du flux de phénol obtenu à l'étape (d) à l'étape (c) pour augmenter le rendement d'hydrocarbures obtenu à partir de l'étape (c) ;
pour obtenir des hydrocarbures comprenant moins de 1 % en poids d'oxygène.

2. Procédé selon la revendication 1, dans lequel la matière organique recyclée ou renouvelable comprend plus de 0,01 % en poids, préférablement 0,05 % en poids, plus préférablement plus de 0,1 % en poids, des composés hydrocarbonés hydroxyaromatiques.

3. Procédé selon l'une quelconque des revendications 1 et 2,
dans lequel l'étape (b) est réalisée par traitement thermique de la matière organique recyclée ou renouvelable.

4. Procédé selon l'une quelconque des revendications 1 et 2,
dans lequel l'étape (b) est réalisée en blanchissant la matière organique recyclée ou renouvelable.

5. Procédé selon l'une quelconque des revendications 1 à 4,
dans lequel l'étape (c) d'hydrotraitement a lieu sous un flux d'hydrogène continu et le flux d'hydrogène continu présente un rapport H2/alimentation de 500 à 2000 n-I/I, préférablement de 800 à 1400 n-I/I.

6. Procédé selon l'une quelconque des revendications 1 à 5,
dans lequel l'étape (c) est réalisée à une température de 270 à 380 °C, préférablement de 275 à 360 °C, plus préférablement de 300 à 350 °C.

7. Procédé selon l'une quelconque des revendications 1 à 6,
dans lequel l'étape (c) est réalisée sous une pression de 4 à 20 MPa.
